# EUROPEAN PATENT APPLICATION

(11) **EP 1 993 012 A2**
(43) Date of publication of application: **19.11.2008**
(21) Application number: 08154296.1
(22) Date of filing: 10.04.2008
(51) Int. Cl.: G05B 19/409

(54) **Numerical controller with function to add display screens**

(30) Priority: 15.05.2007 JP 2007128701
(71) Applicant: FANUC LTD, Minamitsuru-gun, Yamanashi 401-0597 (JP)
(72) Inventor: Murata, Koichi, Minamitsuru-gun Yamanashi 401-0597 (JP); Kubo, Mamoru, Minamitsuru-gun Yamanashi 401-0597 (JP); Yamada, Takafumi, Minamitsuru-gun Yamanashi 401-0597 (JP)
(74) Representative: Ward, James Norman

(57) **Abstract**

A numerical controller having a function to add display screens. The numerical controller comprises a display unit, a memory device stored with a display software which causes the display unit to display a standard display screen, and a detachable external memory device stored with additional display screen data to be displayed as an additional display screen on the display unit. The display software has functions to determine whether or not the external memory device is attached to the numerical controller, determine whether or not tne external memory device is stored with the additional display screen data, and select and display the standard display screen and/or the additional display screen on the display unit based on results of the determination.

## Description

### BACKGROUND OF THE INVENTION

### Field of the Invention

The present invention relates to a numerical controller for controlling an industrial machine, such as a machine tool, and more particularly, to a numerical controller with a function to add display screens newly.

### Description of the Related Art

There are known a numerical controller that can activate an application software stored in an external memory device (see Japanese Patent Application Laid-Open No. 2005-92745) and one that performs only processing for image data stored in an external memory device (see Japanese Patent Application Laid-Open No. 2005-78028).

In newly adding a display screen to a numerical controller, however, software keys must be reset. A display software that is stored in a memory device, such as a flash ROM, of the numerical controller is corrected and stored again into the memory device. The correction of the display software requires a relatively time-consuming compiling operation with every operation test to see if the corrected display software operates correctly.

In order to display the display screen added to the numerical controller, the display software must be executed by rebooting the numerical controller that is temporarily disconnected from the power supply after the corrected new display software is transferred to and stored into the memory device of the numerical controller.

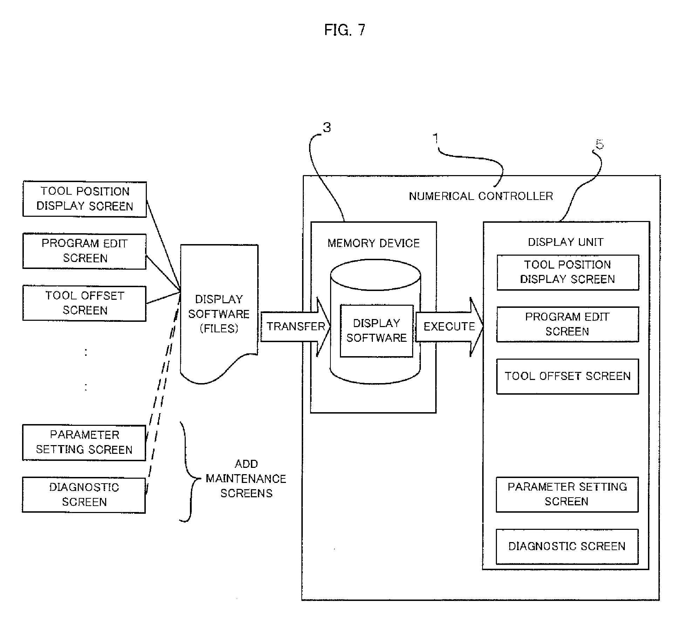

Thus, the addition of the display screen is laborious and complicated, so that all supposable display screens, including maintenance screens that are not usually used for the display software, are stored in the memory device of the numerical controller, as shown in FIG. 7 .

### SUMMARY OF THE INVENTION

The object of the present invention is to provide a numerical controller in which additional display screens to be newly displayed can be displayed without correcting a display software stored in the numerical controller and without temporarily turning off the power of the numerical controller.

In order to achieve the above object, a numerical controller according to the present invention comprises a display unit, a memory device stored with display means which causes the display unit to display a standard display screen, and a detachable external memory device stored with additional display screen data to be displayed as an additional display screen on the display unit. The display means includes attachment/detachment determining means which determines whether or not the external memory device is attached to the numerical controller, storage determining means which determines whether or not the external memory device is stored with the additional display screen data, and selection display means which selects and displays the standard display screen and/or the additional display screen on the display unit based on results of the determination by the attachment/detachment determining means and the storage determining means.

The additional display screen data may be displayed on at least a part of the standard display screen.

The attachment/detachment determining means may switch the additional display screen over to the standard display screen when it is concluded that the external memory device is detached from the numerical controller.

The display means may be a display software. According to the present invention, display screens (e.g., display screens for maintenance) that are not usually used in the numerical controller can be displayed without correcting the display software stored in the built-in memory device of the numerical controller. When a display screen is newly added, moreover, the additional display screen can be displayed without temporarily turning off the power of the numerical controller.

Thus, the display screens can be displayed by only storing the external memory device attached to the numerical controller with various display screen data corresponding to necessary operations, such as maintenance and inspection. In consequence, the storage capacity of the memory device in the numerical controller can be saved.

According to the present invention, moreover, only the standard display screen is normally displayed, and additional screens, such as maintenance screens for system change of the numerical controller, are not usually used. Thus, alternatives for operators' screen selection can be reduced, so that performing wrong operations by an inexperienced operator who is unaccustomed to the operation of the numerical controller can be prevented.

Further, the display of the additional display screen can be prohibited immediately when the external memory device is disengaged from the numerical controller. Thus, performing wrong operations by an operator who is unaccustomed to the operation of the numerical controller can be prevented.

### BRIEF DESCRIPTION OF THE DRAWINGS

The above and other objects and features of the present invention will be obvious from the ensuing description of embodiments with reference to the accompanying drawings, in which:
FIG. 1 is a schematic diagram of a numerical controller according to one embodiment of the present invention;
FIG. 2 is a diagram showing an outline of processing for adding new display screens to the numerical controller of the invention and displaying the screens;
FIG. 3 is a flowchart for illustrating the processing for adding new display screens to the numerical controller of the invention and displaying the screens;
FIG. 4 shows an example of a program edit screen as a standard display screen;
FIG. 5 shows an example of a parameter setting screen as an additional display screen displayed on the entire screen area;
FIG. 6 shows an example in which the parameter setting screen is displayed on a part of the program edit screen; and
FIG. 7 is a diagram showing a prior art technique for adding new display screens to a numerical controller.

### DETAILED DESCRIPTION OF THE PREFERRED EMBODIMENTS

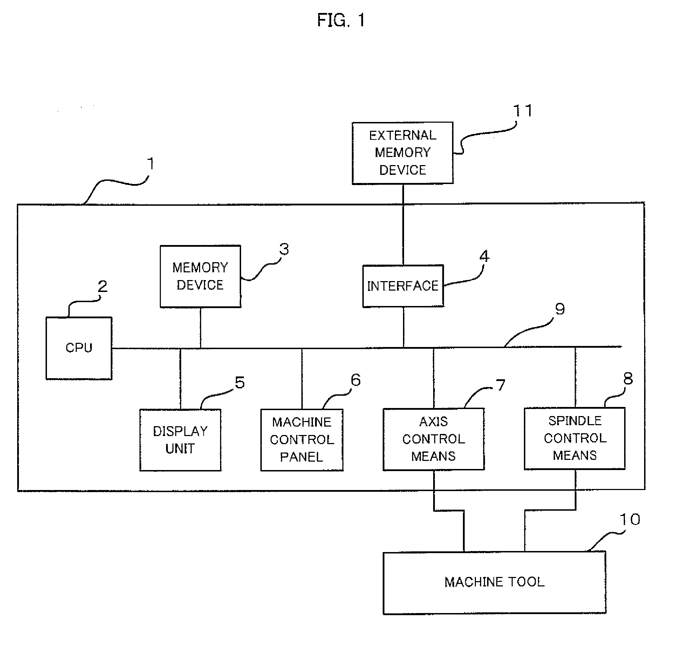

FIG. 1 is a schematic diagram of a numerical controller according to one embodiment of the present invention for controlling a machine tool. This numerical controller is constructed in the same manner as the conventional numerical controller for controlling a machine tool.

The numerical controller according to the present invention differs from the conventional one in that a display software stored in a memory device 3 accesses an external memory device 11 and invokes display screen data to be newly additionally displayed, thereby realizing display of the data as an additional display screen on a display unit 5 of the numerical controller 1.

The numerical controller 1 is provided with a processor (CPU) 2, the memory device 3, an interface 4, the display unit 5, a machine control panel 6, axis control means 7 for controlling servomotors for individual axes of a machine tool 10, and spindle control means 8 for controlling a spindle motor of the machine tool 10. The elements 3 to 8 are connected to the processor 2 by a bus 9.

The memory device 3 is composed of a ROM, RAM, etc., and the ROM is stored with a system program for general control. The interface 4 is connected with the external memory device 11, to and from which a memory card or a USB memory can be attached and detached. The processor 2 reads out the display screen data.

The display unit 5 performs parameter setting, diagnosis, machining program display, etc., based on commands from displayed software keys or a keyboard on the machine control panel 6. The axis control means 7 performs position and speed feedback control to drive the servomotors (not shown) for the respective axes, thereby controlling the motor positions and speeds. This control is based on move commands that are issued from the processor 2 to the axes according to a machining program and position and speed feedback control signals from position/speed detectors that are attached to the servomotors, individually. Further, the spindle control means 8 controls the speed of a spindle based on a spindle speed command issued form the processor 2.

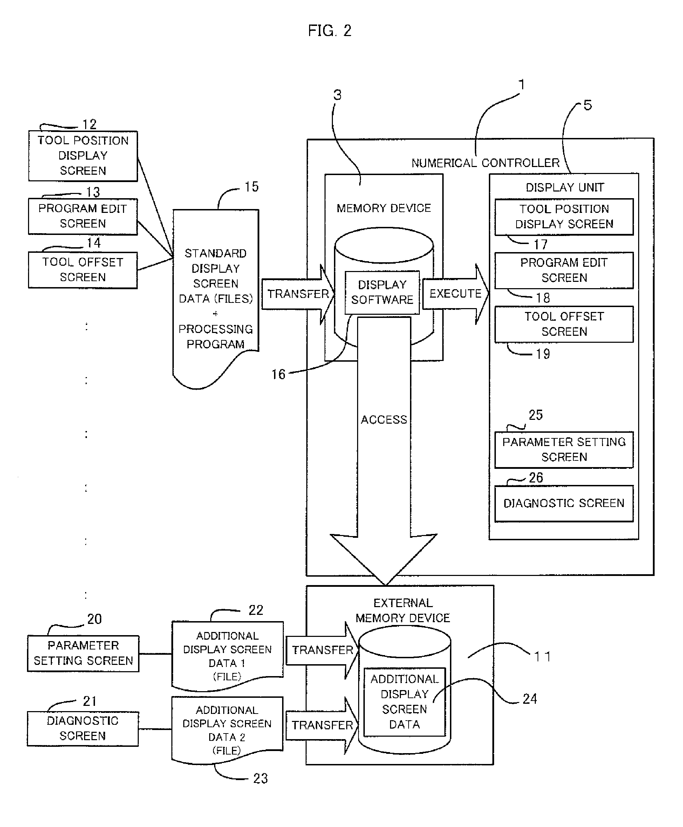

FIG. 2 is a diagram illustrating processing for adding, as additional display screens, a parameter setting screen 20 and a diagnostic screen 21 for maintenance to the numerical controller 1.

Additional display screen data (file) 22 for the parameter setting screen 20 and additional display screen data (file) 23 for the diagnostic screen 21 are generated, and the generated screen data 22 and 23 are stored as additional display screen data 24 into the external memory device 11. The screen data additionally stored in the external memory device 11 may be only one of the two data 22 and 23.

Usually used display screens ("STANDARD DISPLAY SCREENS"), such as a tool position display screen 12, a program edit screen 13, a tool offset screen 14, etc., are prepared as standard display screen data files 15. A display software 16 is composed of a processing program and the standard screen data. The processing program has a function to determine whether or not the external memory device 11 is connected to the numerical controller 1, a function to determine whether or not the external memory device 11 is stored with the additional display screen data 24, and a function to cause the display unit 5 to display a display screen selected by a user. The display software 16 is stored into the memory device 3 of the numerical controller 1.

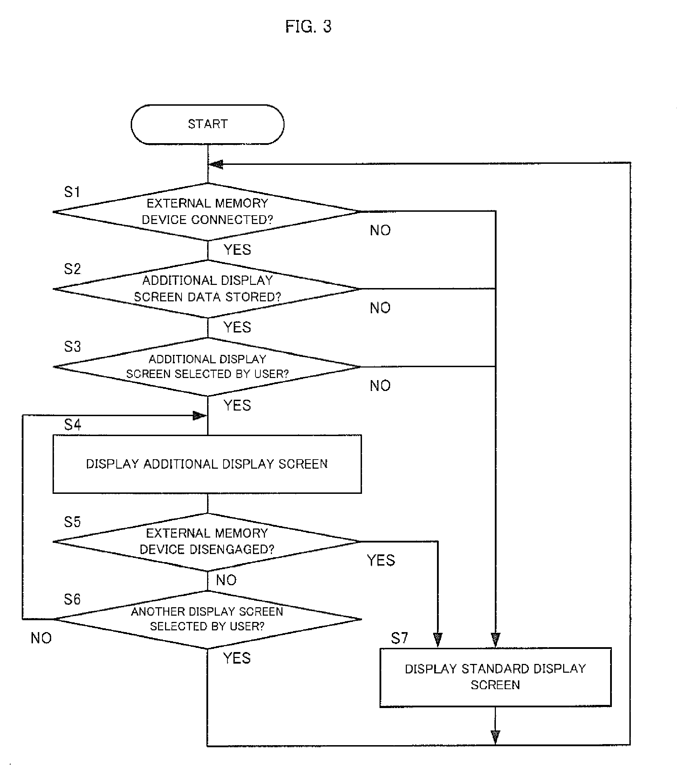

FIG. 3 is a flowchart showing an algorithm to be executed by the processor that performs processing for newly adding screen display.

The processor 2 first executes the display software 16 stored in the memory device 3 to determine whether or not the external memory device 11 is connected to the numerical controller 1 (Step S1). If the external memory device 11 is not connected to the numerical controller 1, the standard display screens (screens 12, 13 and 14) are displayed on the display unit 5 (Step S7). If the external memory device 11 is connected to the numerical controller 1, on the other hand, the processor 2 determines whether or not the external memory device 11 is stored with the additional display screen data 24 to be additionally displayed (Step S2).

If the external memory device 11 is not stored with the additional display screen data 24, the standard display screens are displayed on the display unit 5 (Step S7). If the external memory device 11 is stored with the additional display screen data 24, on the other hand, the user operates the software keys displayed on the display unit 5 to select any of the standard display screens (screens 11, 12 and 13) or the additional display screens (screens 20 and 21) (Step S3).

If the user selects any of "STANDARD DISPLAY SCREENS", the selected standard display screen is displayed on the display unit 5 (Step S7). If the user selects any of "ADDITIONAL DISPLAY SCREENS", on the other hand, the selected additional display screen is displayed on the display unit 5 (Step S4).

When the standard display screen is displayed on the display unit 5 in Step S4, it is determined whether or not the external memory device 11 is disengaged from the numerical controller 1 (Step S5). If the external memory device 11 is disengaged from the numerical controller 1, the standard display screen is displayed on the display unit 5 (Step S7). While no other display screen is selected by the user with the external memory device 11 kept connected to the numerical controller 1, on the other hand, a series of processes of Steps S6, S4, S5 and S6 is repeated. If the user selects another display screen while these processes are being repeated (Step S6), the program returns to Step S1.

An operator selects each of the screens by operating the keys or a touch panel.

The following is a description of the display screens displayed on the display unit 5.

If the external memory device 11 is not connected to the numerical controller 1 (decision in Step S1 is No) or if it is not stored with the additional display screen data 24 to be additionally displayed (decision in Step S2 is No), the screen displayed on the display unit 5 (Step S7) is any one of the "STANDARD DISPLAY SCREENS" including the tool position display screen 12, program edit screen 13, tool offset screen 14, etc.

If the external memory device 11 is connected to the numerical controller 1 (decision in Step S1 is Yes) and stored with the additional display screen data 24 (decision in Step S2 is Yes), on the other hand, the user selects any one of the "ADDITIONAL DISPLAY SCREENS" by operating the software keys of the display unit 5 or the like (decision in Step S3 is Yes). Thereupon, the selected additional display screen is displayed on the display unit 5. If the user selects any of the "STANDARD DISPLAY SCREENS" by operating the software keys of the display unit 5 or the like (decision in Step S3 is No), the selected standard display screen is displayed on the display unit 5.

If the external memory device 11 is then disconnected from the numerical controller 1 (decision in Step S5 is No), the "STANDARD DISPLAY SCREENS" is displayed (Steps S7).

If the user selects another display screen with the external memory device 11 kept connected to the numerical controller 1 (decision in Step S6 is Yes), and if the selected screen is any one of the "STANDARD DISPLAY SCREENS", the program proceeds from Step S6 to Step S7 via Steps S1 and S2, whereupon the selected standard display screen is displayed. If the selected screen is any one (which, however, is supposed to have already been stored in the external memory device 11) of the "ADDITIONAL DISPLAY SCREENS", on the other hand, the program proceeds from Step S6 to Step S4 via Steps S1, S2 and S3, whereupon the selected additional display screen is displayed.

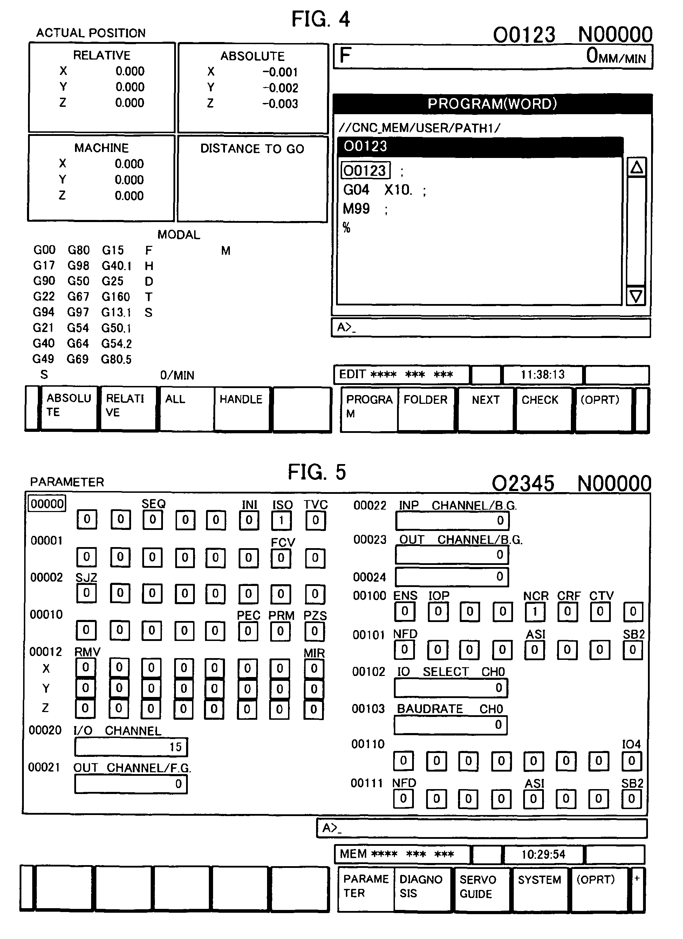

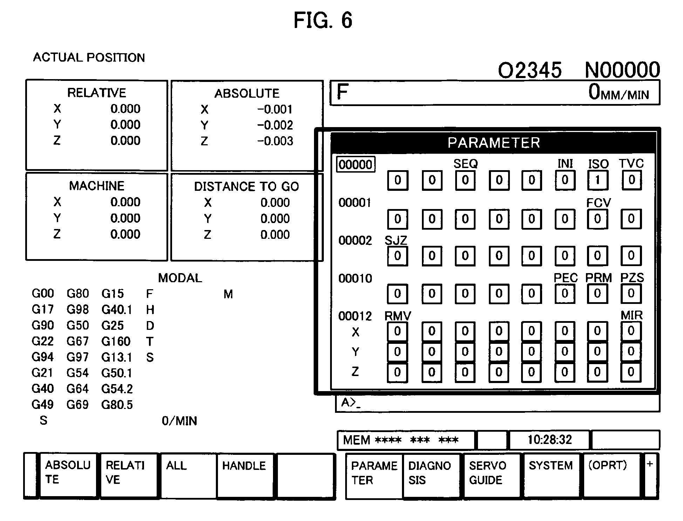

Each display screen is displayed on the display unit as the display software accesses each display screen data. FIG. 4 shows an example of the program edit screen, one of the standard display screens. FIG. 5 shows an example of the parameter setting screen, one of the additional display screens displayed on the entire screen area. FIG. 6 shows an example of the parameter setting screen displayed on a part of the program edit screen of FIG. 4.

Alternatively, the diagnostic screen 21 may be displayed as the display screen to be additionally displayed on the display unit 5 so that the numerical controller 1 can be diagnosed and that result data can be stored into the external memory device 11, whereby diagnostic data can be collected with ease.

## Claims

1. A numerical controller which has a function to add display screens, wherein
said numerical controller comprises:
a display unit;
a memory device stored with display means which causes the display unit to display a standard display screen; and
a detachable external memory device stored with additional display screen data to be displayed as an additional display screen on the display unit, and wherein
said display means includes:
attachment/detachment determining means which determines whether or not the external memory device is attached to the numerical controller;
storage determining means which determines whether or not the external memory device is stored with the additional display screen data; and
selection display means which selects and displays the standard display screen and/or the additional display screen on the display unit based on results of the determination by the attachment/detachment determining means and the storage determining means.

2. The numerical controller according to claim 1, wherein the additional display screen data is displayed on at least a part of the standard display screen.

3. The numerical controller according to claim 1, wherein the attachment/detachment determining means switches the additional display screen over to the standard display screen when it is concluded that the external memory device is detached from the numerical controller.

4. The numerical controller according to claim 1, wherein the display means is a display software.
